# EUROPÄISCHE PATENTANMELDUNG

(11) **EP 2 366 894 A2**
(43) Veröffentlichungstag der Anmeldung: **21.09.2011**
(21) Anmeldenummer: 11157110.5
(22) Anmeldetag: 06.03.2011
(51) Int. Cl.: F03D 3/06

(54) **Modular aufgebautes Rotorblatt für eine vertikale Windkraftanlage**

(30) Priorität: 17.03.2010 DE 102010011802
(71) Anmelder: Schlögl, Christian, 83329 Waging (DE)
(72) Erfinder: Schlögl, Christian, 83329 Waging (DE)
(74) Vertreter: Heilein, Ernst - Peter

(57) **Zusammenfassung**

Die Erfindung betrifft ein modular aufgebautes Rotorblatt für eine vertikale Windkraftanlage nach dem VAWT-Prinzip, mit einer Einrichtung zur Befestigung an einem horizontal rotierbaren Tragarm der Windkraftanlage, einer sich längs der beiden Enden des Rotorblatts ersteckenden und als Blattmodul ausgebildeten Blattschale, einer längs der Blattschale form- oder stoffschlüssig aufgebrachten und als Blattmodul ausgebildeten Profilvorderkante und einer längs der Blattschale form- oder stoffschlüssig aufgebrachten und als Blattmodul ausgebildeten Profilhinterkante. Die Erfindung zeichnet sich dadurch aus, dass der Form- oder Stoffschluss lösbar ausgebildet ist. Die Erfindung eignet sich insbesondere für symmetrisch aufgebaute Rotorblätter, wie sie bei H-Darrieus Rotoren Verwendung finden.

## Beschreibung

Die vorliegende Erfindung betrifft ein modular aufgebautes Rotorblatt für eine vertikale Windkraftanlage nach dem VAWT-Prinzip, mit einer Einrichtung zur Befestigung an einem horizontal rotierbaren Tragarm der Windkraftanlage, einer sich längs der beiden Enden des Rotorblatts ersteckenden und als Blattmodul ausgebildeten Blattschale, einer längs der Blattschale form- oder stoffschlüssig aufgebrachten und als Blattmodul ausgebildeten Profilvorderkante und einer längs der Blattschale form- oder stoffschlüssig aufgebrachten und als Blattmodul ausgebildeten Profilhinterkante.

Vertikale Windkraftanlagen nach dem VAWT (Vertical Axis Wind Turbine) -Prinzip sind auch unter der Bezeichnung H-Darrieus Windkraftanlagen bekannt. Eine in den wesentlichen Bereichen typische Bauweise für eine Windkraftanlage nach dem VAWT-Prinzip ist in der EP 2 028 367 A1 gezeigt. Die normal zur Rotationsachse liegende Profilquerschnittsform eines Rotorblattes ist etwa gleich einem Tragflächenprofil. Die sich zumindest annähernd in vertikaler Richtung erstreckenden Rotorblätter sind durch mindestens einen Tragarm miteinander verbunden und gehalten. Der Tragarm ist in seiner Längsmitte um eine vertikale Achse drehbar gelagert.

Die Rotorblätter sind elementarer und prägender Bestandteil einer Windkraftanlage. Sie werden in Halbschalen-Sandwichbauweise aus glasfaserverstärktem Kunststoff oder Kohlenstofffasern und Leichtbaumaterialien, wie beispielsweise Holz oder Kunststoffschaum, mit Versteifungsholmen oder -stegen, sog. Stringern, im Inneren hergestellt.

Je größer die Rotorblätter umso teurer und aufwändiger ist der Transport vom Fertigungsort zum Einsatzort. Daher sind große Rotorblätter modular aufgebaut und werden erst am erst am Einsatzort zusammengefügt.

So beschreibt die US 2007/0140858 A1 ein modular aufgebautes Rotorblatt für eine Windkraftanlage und ein Verfahren für dessen Aufbau. Die Rotorflügelmodule werden vor Ort zu dem eigentlichen Rotorblatt stoffschlüssig mittels Kleben verbunden.

Je größer die Anlagen, umso höher sind auch die Anforderungen an das Ermüdungsverhalten der Rotorblätter. Die größten Kräfte wirken bekanntermaßen auf die Profilvorderkante und die Profilhinterkante des Rotorblatts.

Die Vorderkante steht im Wind und ist einem stetigen Luft- und Partikelstrom, aber auch anderen Umwelteinflüssen, wie beispielsweise saurem Regen, ausgesetzt. Eine aufgeklebte Schutzbeschichtung erodiert hier am schnellsten und der glasfaserverstärkte Kunststoff kann durch eindringende Feuchtigkeit und UV-Strahlung degradiert werden.

Die Hinterkante ist oft nur wenige Millimeter dick ausgeführt und wird durch den ständigen Strömungsabriss ebenfalls stark belastet. Eine charakteristische Schädigung der Hinterkante ist daher eine Delamination. Die Rotorblätter müssen aber diesen extremen Belastungen standhalten und eine geforderte Lebensdauer von 20 Jahren ohne aufwendige Reparaturen gewährleisten.

Aufgabe der vorliegenden Erfindung ist es ein Rotorblatt bereitzustellen, das ohne aufwendige Reparaturen eine Lebensdauer von 20 oder mehr Jahren gewährleistet.

Die Aufgabe wird erfindungsgemäß von einem modular aufgebauten Rotorblatt für eine vertikale Windkraftanlage nach dem VAWT-Prinzip, mit einer Einrichtung zur Befestigung an einem horizontal rotierbaren Tragarm der Windkraftanlage, einer sich längs der beiden Enden des Rotorblatts ersteckenden und als Blattmodul ausgebildeten Blattschale, einer längs der Blattschale form- oder stoffschlüssig aufgebrachten und als Blattmodul ausgebildeten Profilvorderkante und einer längs der Blattschale form- oder stoffschlüssig aufgebrachten und als Blattmodul ausgebildeten Profilhinterkante, dadurch gelöst, dass der Form- oder Stoffschluss lösbar ausgebildet ist.

Vorteilhafte Aus- und Weiterbildungen, welche einzeln oder in Kombination miteinander eingesetzt werden können, sind Gegenstand der abhängigen Ansprüche.

Die vorliegende Erfindung beruht auf dem allgemeinen Gedanken, bei einem modular aufgebauten Rotorblatt die als Blattmodul ausgebildete Profilvorderkante und die als Blattmodul ausgebildete Profilhinterkante auswechselbar bzw. austauschbar auszubilden. Dadurch wird erreicht, dass die Module eines Rotorblatts, bei denen gehäuft Schädigungen auftreten, ausgetauscht werden können, ohne dass die Notwendigkeit besteht das gesamte Rotorblatt auszuwechseln. Je größer das Rotorblatt, umso größer ist der durch die Erfindung erzielte Vorteil gegenüber herkömmlichen Rotorblättern.

Die Erfindung wendet sich klar ab vom Stand der Technik, der die Profilkanten mittels einer aufgeklebten, gegebenenfalls wechselbaren Schutzbeschichtung zu schützen sucht. Es wurde nämlich gefunden, dass sich eine Schädigung der Schutzbeschichtung sowohl mittelbar wie auch unmittelbar auf das Rotorblatt auswirkt, und somit wieder die Notwendigkeit besteht das gesamte Rotorblatt auszutauschen.

Grundsätzlich läßt sich die vorliegende Erfindung auf jedes Rotorblatt gemäß dem Stand der Technik anwenden, insoweit die aerodynamischen Eigenschaften durch die erfindungsgemäß aufgebrachte Profilvorderkante und Profilhinterkante, nachfolgend gemeinsam als Profilkanten bezeichnet, beibehalten werden. Die Rotorblätter moderner Windkraftanlagen sind, nämlich ähnlich einem Flugzeugflügel, aerodynamisch geformt. Deshalb werden sie nicht nur laufend auf einen höheren Wirkungsgrad, sondern auch auf Geräuschminderung hin optimiert.

Die Verbindungsart zwischen den Modulen (Blattschale und Profilkanten) ist beliebig, solange kein Überlapp entsteht, der die Strömungsverhältnisse negativ beeinflussen würde. Bevorzugte Verbindungsarten sind Überlappungsstoß, Stumpfstoß oder schräger Stoß.

Die Verbindungstechnik zwischen der Blattschale und der Profilvorderkante und/oder der Profilhinterkante ist beliebig, insoweit der Form- und/oder Stoffschluss erfindungsgemäß lösbar ausgebildet ist. Bevorzugte Verbindungstechniken sind Schraub- oder Nietverbindungen. Da Schraub- oder Nietverbindungen die sichtbare Oberfläche verändern, und gegebenenfalls eine ungleichmäßige Spannungsverteilung und Kraftübertragung aufbauen, was zur Veränderung der aerodynamischen Eigenschaften des Rotorblatts führen kann, sind Klebeverbindungen besonders bevorzugt.

Neben den vorstehend genannten Vorteilen bietet die Verbindungstechnik "Kleben" noch die klassischen weiteren Vorteile, insbesondere den der Gewichtsersparnis, der (wasser)dichten Verbindung zwischen den Fügeteilen und den, dass die einzelnen Module nicht beschädigt werden. Die Blattschale wird gemäß der vorliegenden Erfindung wiederverwendet, und sollte demnach vorzugsweise unbeschädigt verbleiben.

Die Blattschale besteht vorzugsweise aus zwei U-förmigen Halbschalen, mit an den beiden Enden nach außen ragenden Flansche. Für die Fertigung der Blattschale werden zunächst die beiden Halbschalen über die Flansche form- und/oder stoffschlüssig verbunden, bevorzugt verklebt. Die Blattschale ist im Inneren gegebenenfalls durch Stringer oder Biegeträger verstärkt bzw. versteift.

In vorteilhaferweise dient die Rückseite der beiden Flansche zur Verbindung der Profilkanten mit der Blattschale, über einen Stoß. Die Stoßverbindung ist erfindungsgemäß lösbar ausgebildet. Vorzugsweise erfolgt die Verbindung über eine stoffschlüssige Verklebung.

Geeignete Klebestoffe, insbesondere thermoplastische Schmelzklebestoffe, die sich reversibel aufschmelzen lassen, d.h. bei genügend hoher Temperaturbelastung wieder flüssig werden und folglich ihre Kohäsion verlieren, sind dem Fachmann bekannt.

Nach der Verbindung der Profilkanten mit der Blattschale wird die Oberfläche geschliffen, poliert und gegebenenfalls mit Lacke, Harze oder einer Folienbeschichtung versiegelt.

Während des Betriebs einer vertikalen Windkraftanlage nach dem VAWT-Prinzip sind nicht nur die Profilvorderkante und die Profilhinterkante extremen Belastungen ausgesetzt, sondern insbesondere auch die Rotorblattspitzen. Sie unterliegen unter bestimmten äußeren Bedingungen noch höheren Verschleißerscheinungen als die Profilkanten. Es ist daher vorteilhaft, die Blattspitzen des Rotorblatts als Module vorzusehen, und diese form- oder stoffschlüssig auf die Blattschale des Rotorblatts aufzubringen, wobei der Form- oder Stoffschluss lösbar ausgebildet ist.

Eine bevorzugte Ausführungsform der vorliegenden Erfindung sieht vor, sowohl die Profilvorderkante und Profilhinterkante wie auch die Blattspitzen als Rotorblattmodule vorzusehen, und diese Module form- und/oder stoffschlüssig auf die Blattschale des Rotorblatts aufzubringen, wobei der Form- oder Stoffschluss erfindungsgemäß lösbar ausgebildet ist. Dies hat den Vorteil, dass je nachdem, ob lediglich Schäden an den Spitzen oder aber entlang einer Profilkante aufgetreten sind, die jeweils betroffenen Module ausgetauscht werden können.

In einer alternativen Ausführungsform werden die Blattspitzen nicht auf die Blattschale sondern auf die zusammenlaufenden Enden der Profilvorderkante und der Profilhinterkante aufgebracht.

Das erfindungsgemäße Rotorblatt zeichnet sich zudem dadurch aus, dass das Material und die Materialstärke der Profilkanten und der Blattspitzen frei wählbar sind.

Demnach können in vorteilhafterweise für die Profilkanten und Blattspitzen, in Einsatzgebieten mit einem hohen Partikelstrom oder anderen negativ wirkenden Umwelteinflüssen, wie beispielsweise saure Niederschläge, speziell auf diese äußeren Bedingungen angepasste Materialien und Materialstärken verwendet werden.

Geeignete Materialien für die jeweiligen spezifischen Bedingungen (Offshore, Industriegebiet, etc.) sind dem Fachmann bekannt. Beispielsweise sei hier Polyurethan als Profilkantenmaterial erwähnt. Das teilelastische Material absorbiert die durch den Partikelstrom verursachten Stöße und verteilt so die Stoßenergie auf die gesamte Kantenfläche, wodurch Blattschäden reduziert werden. Auch Metalle, wie beispielsweise Aluminium oder Metall-Legierungen eignen sich für bestimmte Einsatzgebiete.

Ferner können Materialien verwendet werden, die nicht zur Vereisung neigen oder aber die mittels einer Wärmequelle, beispielsweise einem Widerstandsdraht beheizbar sind.

Das Prinzip der Erfindung wird im Folgenden anhand von Zeichnungen beispielshalber näher erläutert. Es zeigen:
- Figur 1: ein modular aufgebautes Rotorblatt gemäß vorliegender Erfindung,
- Figur 2: einen Querschnitt A-A (schematisch) durch ein modular aufgebautes Rotorblatt und
- Fig. 3: einzelne Module eines modular aufgebauten Rotorblatts gemäß der vorliegenden Erfindung.

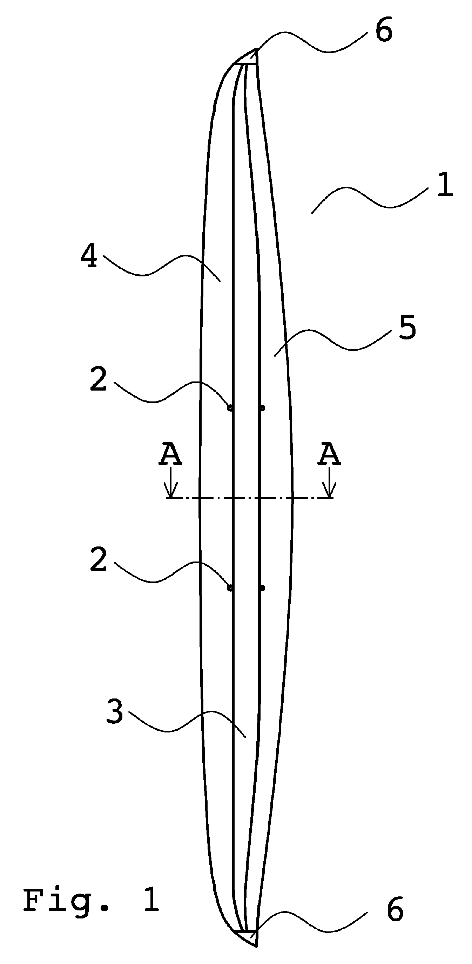

Figur 1 zeigt ein erfindungsgemäßes modular aufgebautes Rotorblatt 1 mit einer Einrichtung 2 zur Befestigung an einem horizontal rotierbaren Tragarm einer Windkraftanlage, einer sich längs der beiden Enden des Rotorblatts ersteckenden Blattschale 3, einer längs der Blattschale form- oder stoffschlüssig aufgebrachten Profilvorderkante 4 und einer längs der Blattschale form- oder stoffschlüssig aufgebrachten Profilhinterkante 5, sowie form- oder stoffschlüssig aufgebrachte Rotorblattspitzen 6.

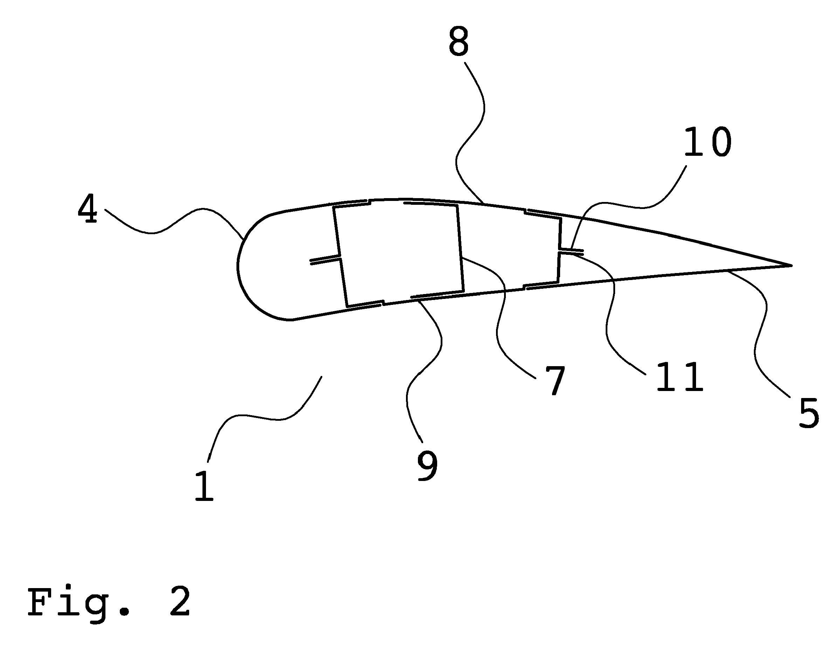

Figur 2 zeigt einen Querschnitt (A-A) eines erfindungsgemäßen Rotorblatts 1 mit einem Versteifungssteg oder Stringer 7 im Blattschaleninneren, der mit der Innenfläche stoffschlüssig verklebt ist. Die Blattschale aus glasfaserverstärktem Kunststoff wird von zwei U-förmigen Halbschalen 8, 9 mit an den beiden Enden nach außen ragenden Flansche 10, 11 gebildet. Die beiden Halbschalen 8, 9 sind über die Flansche 10, 11 verklebt. Die Profilvorderkante 4 wie auch die Profilhinterkante 5 sind ohne Überlapp, beispielsweise über eine Stumpfstoßverbindung (nicht in der Figur dargestellt) auf der Blattschale aufgeklebt.

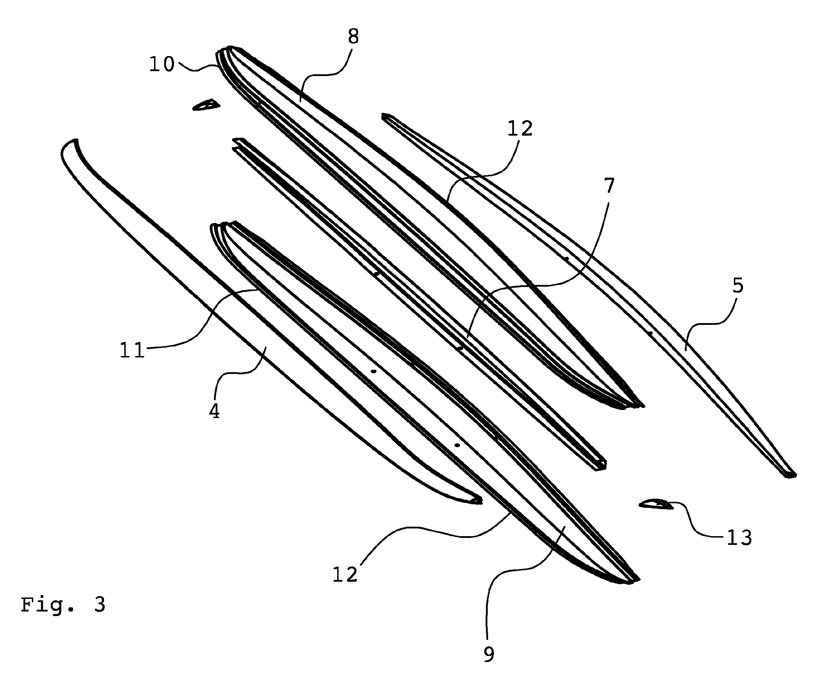

Figur 3 zeigt die einzelnen Module eines modular aufgebauten Rotorblatts gemäß der vorliegenden Erfindung. Die beiden Halbschalen 8, 9 werden über die Flansche 10, 11 verklebt und bilden zusammen mit dem Stringer 7 die Blattschale 3. Über die Stufen 12 Flanschoberseite sind die Profilvorderkante 4 und die Profilhinterkante 5 flächig, ohne Überlapp mittels einer Überlappungsstoßverbindung aufkleben. Erfindungsgemäß ist dieser Stoffschluss beispielsweise durch die Einwirkung von Heißluft oder IR-Bestrahlung, d.h. durch Temperaturerhöhung, lösbar. Auch die Rotorblattspitzen 13 sind in diesem Ausführungsbeispiel als Module ausgebildet und auf das Rotorblatt aufgeklebt. Auch diese stoffschlüssige Verbindung ist lösbar, um beschädigte Spitzen 13 auswechseln zu können.

Die vorliegende Erfindung eignet sich insbesondere für symmetrisch aufgebaute Rotorblätter, wie sie bei H-Darrieus Rotoren Verwendung finden. Die langgestreckte Blattsymmetrie ermöglicht eine flächige Verklebung der Profilkanten entlang einer Geraden, was wiederum ein einfaches Austauschen mittels des lösbaren Stoffschlusses von beschädigten Kanten gewährleistet.

## Patentansprüche

1. Modular aufgebautes Rotorblatt (1) für eine vertikale Windkraftanlage nach dem VAWT-Prinzip, mit einer Einrichtung (2) zur Befestigung an einem horizontal rotierbaren Tragarm der Windkraftanlage, einer sich längs der beiden Enden des Rotorblatts ersteckenden und als Blattmodul ausgebildeten Blattschale (3), einer längs der Blattschale (3) form- oder stoffschlüssig aufgebrachten und als Blattmodul ausgebildeten Profilvorderkante (4) und einer längs der Blattschale form- oder stoffschlüssig aufgebrachten und als Blattmodul ausgebildeten Profilhinterkante (5), **dadurch gekennzeichnet, dass** der Form- oder Stoffschluss lösbar ausgebildet ist.

2. Rotorblatt nach Patentanspruch 1, **dadurch gekennzeichnet, dass** der Formschluss eine Niet- oder Schraubverbindung und der Stoffschluss eine Klebeverbindung ist.

3. Rotorblatt nach Patentanspruch 1 oder 2, **dadurch gekennzeichnet, dass** die Blattschale (3) aus zwei U-förmigen Halbschalen (8, 9), mit an den beiden Enden nach außen ragenden Flansche (10, 11) gebildet ist, und dass die Flansche verklebt sind.

4. Rotorblatt nach Patentanspruch 1, 2 oder 3 **gekennzeichnet durch** zwei weitere lösbar aufgebrachte Blattmodule, die als Rotorblattspitzen (6) ausgebildet sind.

5. Rotorblatt nach einem der vorstehenden Ansprüche, **dadurch gekennzeichnet, dass** das Material und/oder die Materialstärke der Module an die äußeren Bedingungen des jeweiligen Einsatzortes der Windkraftanlage angepasst sind.

6. Rotorblatt nach einem der vorstehenden Ansprüche, **dadurch gekennzeichnet, dass** zumindest die Profilvorderkante beheizbar ist.

7. Rotorblatt nach einem der vorstehenden Ansprüche, **dadurch gekennzeichnet, dass** die Blattschale mittels Versteifungselemente stabilisiert ist.

8. Rotorblatt nach einem der vorstehenden Ansprüche, **gekennzeichnet durch** folgende Blattmodule: zwei U-förmige Halbschalen, eine Profilvorderkante eine Profilhinterkante und zumindest ein Versteifungselement.

9. Rotorblatt nach Anspruch 8, **gekennzeichnet durch** zwei weitere Blattmodule, die als Blattspitzen ausgebildet sind.

10. Windkraftanlage nach dem VAWT-Prinzip, **gekennzeichnet durch** Rotorblätter nach einem der Ansprüche 1 bis 9.
